# EUROPEAN PATENT SPECIFICATION

(11) **EP 3 977 272 B1**
(45) Date of publication and mention of the grant of the patent: **22.05.2024**
(21) Application number: 20730219.1
(22) Date of filing: 29.05.2020
(51) Int. Cl.: G06F 9/451, G06F 3/14, G09G 3/00, G09G 5/00, G09G 5/14

(54) **MULTIMEDIA SYSTEM WITH OPTIMIZED PERFORMANCE**
MULTIMEDIASYSTEM MIT OPTIMIERTER LEISTUNG
SYSTÈME MULTIMÉDIA À PERFORMANCES OPTIMISÉES

(30) Priority: 31.05.2019 GB 201907708
(43) Date of publication of application: 06.04.2022
(73) Proprietor: Continental Automotive Technologies GmbH, 30175 Hannover (DE)
(72) Inventor: ONG, Soon Lee, Singapore 339780 (SG)
(74) Representative: Continental Corporation
(86) International application number: PCT/EP2020/064941
(87) International publication number: WO 2020/239968

(56) References cited:
- EP-A1- 2 962 479
- EP-A1- 2 998 956
- EP-B1- 2 962 479
- WO-A1-2014/040194
- US-A1- 2018 261 190

## Description

### FIELD OF INVENTION

This invention generally relates to a multimedia system in a vehicle and specifically relates to optimizing performance of the multimedia system.

### BACKGROUND OF INVENTION

With the widespread usage of high definition displays for in-vehicle multimedia entertainment systems, the bandwidth of the bus to the memory of such systems becomes critical when considering performance. This is because the rendering of contents onto high definition displays requires high bandwidth when reading and writing to the memory. Particularly, concurrent use of applications requiring such high bandwidth of the memory bus typically leads to 100% bus load, resulting in slow system response which manifests in, e.g., slow execution of user input, drastic frame rate drop and lag in rendering to the display. Bus load is the percentage of the total bus traffic going through the bus and includes overheads from bus arbitration. Bus utilization is the percentage of the total bus traffic that is useful, i.e. data going through the bus that is useful, e.g. data going to the applications and not unneeded data that will be flushed. When a memory bus has high bus load percentage, e.g. 90% or more, the bus utilization may only be a fraction of the bus load percentage, e.g. less than 60% depending on the system. In other words, although the memory bus is busy, e.g. for 90% of the time, actual useful data or throughput going through the memory bus may only be less than 60%. Furthermore, as the system gets more complex, the number of bus masters increases, which increases bus load and decreases bus utilization further, e.g. further decrease of 30%.

Therefore, it is imperative to decrease the load on the memory bus.

An existing way to reduce the load on the memory bus is to render contents to the display at a fixed, artificially low rate. However, a user may perceive such a system to have poor performance even though the system is capable of providing faster response. Thus, such systems compromise user experience. Another existing way is to provide different rates at which displayed content from different information sources over the Internet are refreshed with updated data. That is, content considered as having lower priority is refreshed at a lower rate, while content considered as having higher priority is refreshed at a higher rate. However, optimizing the bandwidth required to obtain information over the Internet does not necessarily optimize bandwidth requirements on the memory bus. Particularly, after information is acquired from the Internet, the processes of such prior art systems may not optimally utilize the system's resources like memory and CPU load, and therefore may not optimize the load on the memory bus.

Therefore, there is a need for a new or improved system and method that overcomes or at least ameliorates one or more of the disadvantages discussed above.

EP2962479A1 discloses efficient methods for streaming graphical information to an in-vehicle information system in bandwidth-constrained configurations. WO2014/040194A1 teaches adjusting rendering parameters based on bus load threshold. EP2998956A1 relates to an electronic device having the capability of dynamically switch a refresh rate of a display panel dependent on the usage scenario of multiple concurrent multimedia applications. US2018/261190A1 relates to a method for controlling display refresh rate of an electronic device by using a suitable display refresh rate according to the number of foreground applications.

### SUMMARY

It is therefore an object to provide a multimedia system and associated method to address the problems discussed above. Particularly, it is an object to provide a multimedia system and associated method that optimizes performance and decreases lag regardless of the number of user applications running on the system. It is a further object to provide a multimedia system and associated method capable of flexibly managing the changing bandwidth requirements on the memory bus.

To accomplish these and other objects, the invention is set out in the appended set of claims.

The disclosed system takes advantage of conditions suitable to determine whether frame rates should be attenuated. A suitable condition is, for example, one that reflects the processing load of the system. According to the invention, the detection module is configured to detect the load of bus(es) to the computer-readable storage media, referred to herein as the bus load or load of the memory bus. According to the invention, if the detection module detects that the memory bus load is busy, e.g. when the bus load is above about 90%, the display controller may then be configured to render each frame of the displayed content at an attenuated rate. Conversely, if the detection module detects that the memory bus is able to respond relatively flexibly to future processing requests, e.g. if the bus load is below about 60% or 70%, the display controller is configured to render each frame of the displayed content without any attenuation.

According to the invention, the detection module isis configured to detect the number of user applications concurrently running on the system. Preferably, if the detection module detects that more than one user application is concurrently running on the system, the more than one user application thereby contributing to an increased processing load on the system, the display controller may then be configured to render each frame of the displayed content at an attenuated rate. Conversely, if the detection module detects that there are no concurrently running user applications, i.e. the foreground application is the only user application running on the system, the display controller is configured to render each frame of the displayed content without any attenuation. Advantageously, the disclosed system is able to respond flexibly depending on the processing load of the system. The disclosed system can dynamically balance the load on the memory bus from the more than one concurrently running user applications. This isis particularly advantageous when the more than one concurrently running user applications each require high bandwidth of the memory bus and/or collectively consume high memory bus bandwidth.

The disclosed system is therefore be designed to optimally manage the resources available to it. It has been discovered that rendering of content for display utilizes a significant amount of bandwidth, as compared to other operations such as writing data from the Internet to cache memory, database crunching, and normal CPU computation. Hence, regardless of whether a system has a large amount of memory or high processing speed at its disposal or not, the present invention optimizes the rate of the rendering operation, thereby reducing and/or optimizing the overall bandwidth going through the memory bus.

The rate of attenuation isis determined based on the load of bus(es) to the computer-readable storage media, i.e. the memory bus load. The load on the memory bus isis contributed by the operations of the user application or user applications. The memory bus load isis the total load contributed by all the user applications. In straightforward use cases where overheads are negligible, the rate of attenuation is determined based on memory bus bandwidth of the or each user application, e.g. amount of data required by the user application or each of the more than one concurrently running user applications. The content that is displayed and therefore most evident to the user isis controlled to be displayed at an appropriate frame rate depending on the use case, e.g. at a frame refresh rate proportionate to the amount of new content that needs to be displayed. For example, depending on the design or requirements of the multimedia system, a user application that has displayed content that is constantly changing is attenuated at a lower rate than another user application that has static displayed content. Another design ideology could be that because a user application has displayed content that is changing faster than the user can react, such user application is attenuated at a higher rate to decrease bus load. The rate of attenuation is chosen to minimize discontinuous movements rendered on consecutive frames, so that the user experiences minimal lag. For example, a user application commonly running on vehicle multimedia systems is the navigation application, which displays content that is constantly changing as the vehicle moves. Thus, when the foreground application is the navigation application, it is advantageous that the rate of attenuation is chosen to minimize discontinuous frame changes that are obvious to the user's eye. On the other hand, a user application that is not displayed or cannot be seen by the user, e.g. a background user application, is attenuated at a higher rate or refreshed at a lower rate, thereby reducing its contribution of bandwidth going through the memory bus.

The rate of attenuation is dynamically determined based on the memory bus load. The memory bus load is periodically measured so that the rate of attenuation is dynamically updated or removed. The bus load measurement is feedbacked to the display controller or the user application to effect the frame rate attenuation or to effect a cancellation of the frame rate attenuation. When multiple user applications are concurrently running, each user application is assigned with a unique refresh rate attenuation. Each time a user application is stopped or closed or a new user application is started up, the memory bus load is detected and/or measured and/or the rate of attenuation determined. Advantageously, the rate of attenuation is customized for each scenario. A fixed percentage decrease of frame rate is implemented for the or each of the concurrent user applications. Alternatively, a percentage decrease of frame rate is implemented for certain types of user applications and another percentage decrease of frame rate is implemented for other types of user applications.

As mentioned above, the detection module may detect the number of user applications to decide whether a refresh rate attenuation is required. The detection module may detect all or at least some user applications that are running on the system. The user applications that are detected is those that consume high memory bus bandwidth or are resource-intensive, such as navigation, video playback, voice recognition, and connection to mobile devices. In an example, the detection module is configured to detect the number of user applications requesting audio output. Audio coming from different sources or overlapping audio output is indications of multiple concurrently running user applications in a multimedia audio system. The detection module may manage the user applications which output a sound based on, e.g. a priority table, so that audio can be output appropriately, e.g. through the requisite audio channel. As audio output can be an indication of a resource-intensive user application in a multimedia system, such detection module is suitable to detect the number of user applications that are resource-intensive.

The detection module is part of or an addition to the user application, for example a plugin to the foreground application.

Hence, according to the invention, the detection module is an audio plugin or an audio manager.

Other ways to decide whether a refresh rate attenuation is required is also within the scope of the present invention. For example, the processing load or memory load is used to decide whether the displayed frames are to be rendered at an attenuated rate.

In another aspect, there is provided a method of optimizing performance of a multimedia system in a vehicle capable of concurrently running more than one user application, the method comprising: detecting, by a detection module of the system, a condition of the system; when the condition goes beyond a threshold, rendering, by a display controller of the system, content of each frame of a foreground application displayed on a display at an attenuated rate; when the condition is within the threshold, rendering, by the display controller, each frame of the displayed content without any attenuation.

The method may further comprise: receiving, by the display controller, a rate of attenuation based on load of the bus(es) to computer-readable storage media. The rate of attenuation is dynamically adjustable depending on the load placed on the memory bus by all operations and user applications running on the system.

In some embodiments, the method may comprise detecting, by the detection module, the load of bus(es) to computer-readable storage media of the system or the memory bus load. When the bus(es) to computer-readable storage media is detected to be busy, e.g. when the bus load is above about 90%, the method may comprise rendering each frame at an attenuated rate. Conversely, when the bus(es) to computer-readable storage media is detected to be able to respond to future processing requests, e.g. if the bus load is below about 60% or 70%, the method may comprise rendering each frame without any attenuation.

According to the invention, the method comprises detecting, by the detection module, the number of user applications concurrently running on the system. To decide whether a refresh rate attenuation is required, the detecting step may detect the number of user applications running on the system, by detecting the number of user applications requesting audio output, since audio coming from different sources or overlapping audio output is indications of multiple concurrently running user applications in a multimedia system. When more than one user applications are detected to be concurrently running on the system, the memory bus load is considered busy, therefore the method may comprise rendering each frame at an attenuated rate. Conversely, when the foreground application is the only user application running on the system, the method may comprise rendering each frame without any attenuation. The detection module is a plugin to the system. The detection module is part of or an addition to the user application, for example a plugin to the foreground application performing the refresh rate attenuation.

The disclosed method achieves the objective of optimizing performance when the vehicle multimedia system is used to run a navigation application.

Advantageously, the disclosed method aids in balancing the load on the memory bus by reducing the refresh rate when multiple user applications are running concurrently or when certain conditions such as memory bus load go beyond a threshold, yet rendering content at the original frame rate when there is no lack of computing resources, e.g. when the foreground application is the only user application running on the system.

### BRIEF DESCRIPTION OF DRAWINGS

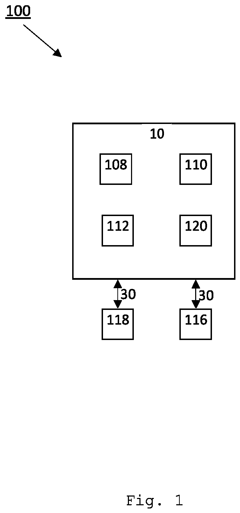

Fig. 1 illustrates a hardware block diagram of a multimedia system 100 in accordance with this invention.

In the figures, like numerals denote like parts.

### DETAILED DESCRIPTION

Hereinafter, the present invention will be described in detail with reference to the accompanying drawings. The detailed description of this invention will be provided for the purpose of explaining the principles of the invention and its practical application, thereby enabling a person skilled in the art to understand the invention with suitable variants as are suited to the particular use contemplated.

A multimedia system in a vehicle is provided. The system is capable of concurrently running more than one user application. The system comprises at least one processor and computer-readable storage media comprising non-transitory computer-readable storage medium having computer-readable instructions stored on the storage medium, the system being configured to execute the computer-readable instructions by the processor. The computer-readable instructions comprise a detection module and a display controller. The detection module is configured to detect a condition of the system, while the display controller is configured to determine which user application is a foreground application being displayed on a display and render displayed content. If the detection module detects that the condition goes beyond a threshold, the display controller is configured to render each frame of the displayed content at an attenuated rate. If the detection module detects that the condition is within the threshold, the display controller is configured to render each frame of the displayed content without any attenuation.

A method of optimizing performance of a multimedia system in a vehicle capable of concurrently running more than one user application is also provided. The method comprises detecting, by a detection module of the system, a condition of the system. When the condition goes beyond a threshold, the method comprises rendering, by a display controller of the system, content of each frame of a foreground application displayed on a display at an attenuated rate. When the condition is within the threshold, the method comprises rendering, by the display controller, each frame of the displayed content without any attenuation.

A multimedia system refers to a system for playing different types of digital media, such as text, audio, video, computer graphics, photographs, and animation. In the context of a multimedia system in a vehicle, the most common applications include but are not limited to navigation, audio, radio, playback of auxiliary media, video playback, voice recognition, connection to mobile devices e.g. through Apple CarPlay^{™}, Baidu's CarLife, Android Auto, etc. Other applications that a vehicle multimedia system may have include hands-free voice calling and reading out messages and emails. A vehicle multimedia system may also be referred to as, or may include, the head unit or the infotainment unit. A user of the multimedia system is the driver or owner or passenger or occupant of the vehicle.

To play different types of media, the multimedia system is, for example, an embedded system or a general computing device. Fig. 1 illustrates a hardware block diagram of a multimedia system 100 in accordance with this invention. The multimedia system 100 may comprise one or more processing devices 10, e.g. a system-on-chip or microcontroller, to enable the functions of the multimedia system. The multimedia system 100 typically includes, among other components, a plurality of processors connected to computer-readable storage media or memory modules (generically referenced as 118) by communication buses (generically referenced as 30) . Although memory modules 118 are shown in Fig. 1 as external to the processing device 10, the memory modules may alternatively or additionally be included in the processing device. The processors may include one or more central processing units, such as ARM core, and other processors, such as controllers, 2D and/or 3D graphics processors, video processors, image processors, etc, which are located on a processing device. In Fig. 1, processing device 10 comprises central processing unit 120, a video processor 108, image processor 110 and graphics processor 112, which are each in communication with memory modules 118. While Fig. 1 shows one central processing unit 120, multimedia systems may comprise more than one central processing unit. For example, a multimedia system comprising two central processing units is typically considered a dual core system, while a multimedia system comprising four central processing units is typically considered a quad core system. Typically, central processing unit 120 executes instructions to initialize and run the video processor 108, image processor 110 and/or graphics processor 112. Once the central processing unit 120 instructs the processors 108, 110 and/or 112, the processors 108, 110 and/or 112 execute the instructions independently. That is, the processors 120, 108, 110 and 112 may individually write data to and read data from memory modules such as cache memory, RAM e.g. DDR RAM, and flash memory e.g. NAND flash and NOR flash. The computer-readable storage media or memory modules 118 may comprise transitory and non-transitory computer-readable storage mediums. For example, the central processing unit 120 may read computer-readable instructions from a non-transitory memory module and write data to a transitory memory module in response to the instructions. In response to the instructions, central processing unit 120 may write instructions for the video processor 108, image processor 110 and/or graphics processor 112 to read and execute. One, some or all of the processors is configured to or involved in rendering contents of each user application or concurrently run user applications, while the memory modules coupled to the processors is configured to store the rendered contents. The memory modules are also accessed by other peripheral devices such as USB devices, personal mobile devices, DVD or Blu-ray^{™} disc drives, although the drivers of the peripheral devices typically write to the memory modules by direct memory access for better efficiency. Direct memory access is a potential memory bus master that can cause the memory bus load to increase. The multimedia system also typically includes means for receiving user input, such as a user interface or human-machine interface, rotary knobs, actuators on the steering wheel, mouse, joystick, touch screen display, a microphone, haptic actuator and/or other input mechanisms like voice recognition, gesture recognition, etc. The multimedia system further typically includes a display screen or display to output the multimedia or any information. The input means is in communication with the display controller which receives the user input from the input means and directs the execution of the user input to, for example, a processor or group of processors, which processes the input to provide an output as requested. Peripheral devices, means for receiving user input, means for outputting multimedia or information, e.g. a display, and other peripherals to the multimedia system are generically referenced as 116.

According to the invention, the vehicle multimedia system disclosed herein is an embedded system. Embedded systems are typically designed to perform one or a few dedicated functions, such as the functions disclosed herein. The embedded system may not be configurable to include functions unrelated or separate to the dedicated functions. An embedded system may read software or computer-readable instructions from a built-in chip, not from a disk like a general-purpose computer system such as a desktop PC. Therefore, system resources of an embedded system to run concurrent user applications are limited. An embedded system may have real-time computing constraints. While the system is designed to concurrently run more than one user application, system resources of an embedded system is inadequate to support the running user applications and/or any new actions. Thus, the present invention advantageously provides a solution for embedded systems to optimize their performance.

The multimedia system comprises software architecture. The software architecture generally comprise computer-readable instructions stored on a non-transitory computer-readable storage medium to enable the multimedia system to perform its functions. As is known to a person of skill in the art, software or code or instructions is implemented in various layers of a computing system. The lowest layer of code (physical or hardware layer) transmits and receives raw bits from the hardware to serve the layer above it. The highest layer of code interacts directly with the end user. The computer-readable instructions encompass code traversing several layers. The software architecture include, but is not limited to, an operating system of the multimedia system, application software for each user application, and other software that is needed to interface between the operating system and application software or perform other functions required by the multimedia system.

User applications for a multimedia system are software programs or a set of instructions that work with the system's hardware components to allow the user to use and experience multimedia. The operations involved in running a multimedia application include audio encoding and decoding, video encoding and decoding, content rendering, audio volume changing, colour space conversion, overlaying, among many other operations. In a specific example, the operations involved in running a navigation application include navigation map rendering, generating audio output for turn-by-turn instructions, audio volume changing, overlaying, among many other operations. User applications can be manipulated by a user action or user input, for example the user can start an application, switch multimedia source, e.g. switch to video source or an audio source, switch application surface, or manipulate the application surface, e.g. scrolling to display another map section or zooming a map section in or out. These operations and actions contribute to the bandwidth requirements on the memory bus(es).

While the invention is suitable for any applications concurrently running on a multimedia system, the disclosed invention advantageously assists multimedia systems configured to concurrently run a navigation application and at least one other user application, particularly at least one other resource-intensive user application, e.g. high-definition video playback or voice recognition.

The operations and actions contributing to the bandwidth requirements on the memory bus(es) specific to the navigation application are described. A navigation engine typically includes stored map databases, and route calculation and/or route optimization capabilities. The navigation engine typically requires rendering of roads, buildings and other details depending on requirements, for the displayed map section. When the navigation engine is incorporated into the multimedia system, rendering of the map utilizes the system's graphics processing unit. Rendering of objects such as roads and buildings is in 2D or 3D. Therefore, a 2D graphics processing unit uses the memory bus in order to render 2D graphics, while a 3D graphics processing unit uses the memory bus in order to render 3D graphics. There will therefore be two bus masters, thereby necessitating arbitration by the bus and contributing to an increase in bus load. The current position of the vehicle, obtained from e.g. the vehicle's GPS system or inertial sensors, is overlaid onto the rendered surface (typically utilizing the system's image processing unit, therefore adding another bus master) to construct the final frame for display. Turn-by-turn instructions is also be rendered or overlaid onto the frame. Alternatively, route guidance is output audibly, in which the audio frame would need to be synchronized with the navigation frame. When the user scrolls to display another map section or zooms a map section in or out (typically utilizing the system's CPU or ARM core), the rate at which each navigation frame is rendered is designed by the navigation engine to be high enough, e.g. 15 fps or higher, so that frame transitions are smooth.

When the processor(s) are instructed to execute any action, the processor (s) take control of the bus to the memory module, thereby becoming the memory bus masters. For example, rendering and displaying a navigation map of the navigation application illustrated above involve the graphics processing unit, ARM core and image processing unit as memory bus masters. In another example, playing a HD video from a media file in a peripheral USB device involves the video processing unit, the graphics processing unit and the image processing unit, and therefore these processors become the memory bus masters. Accordingly, any user action like selecting video playback, requesting navigation route guidance, audio source changing, volume changing and screen switching requires one or a host of bus masters.

The bus or buses to the memory, i.e. the memory bus, should have sufficient bandwidth to transmit data to and from the memory, even data for high bandwidth use cases or user applications or resource-intensive operations, e.g. user actions. However, when incorporated into a multimedia system that may not be powerful enough to execute the navigation engine's designed capabilities concurrently with other user applications or operations that are increasingly sophisticated, the bandwidth to the memory bus is overwhelmed. The system may not be responsive to user actions or other non-graphics, non-video related actions, due to higher priority for graphics and video processing. The disclosed invention aims to mitigate such instances where the memory bus does not have sufficient bandwidth to concurrently execute all actions and any new actions, especially when the system is multi-tasking and running multiple user applications concurrently. In general, the capability of the bus determines how quickly components of the computer system can communicate with each other. Thus, the speed of the connection to the memory, e.g. RAM, directly controls how fast the computer system can access instructions and data.

It has been discovered that rendering of content for display on a full display screen utilizes a significant amount of bandwidth, as compared to other operations. This is because each pixel of a display requires a certain amount of data, and since a typical display has thousands of pixels, the amount of data required to render content for a full display screen becomes very large. In an example, to display a HD video, a common HD video display size uses 720 lines with 1280 pixels per line (1280 x 720) . Each colour pixel typically uses 32 bits per pixel, i.e. 4 bytes, and the refresh rate of a typical HD display is 30 frames per second. Accordingly, for one read cycle and one write cycle, the bandwidth required to render 30 video frames in one second to such a HD video display is: Bandwidth = 1280 pixels x 720 pixels x 4 bytes (true colour pixel size) x 30 fps x 2 (read and write cycles) = 220 MB/sec

The above example shows that user applications having a high number of frames per second, e.g. 30 fps for video playback, is potentially be resource intensive, particularly when more than one such resource-intensive applications are concurrently running. The terms "refresh rate" or "frame rate" as used herein refer to the number of frames per second that are rendered for display or the rate of rendering content for display, which is different from and contrasted to the refresh rate of a display screen whereby already-rendered content or the frames that are already constructed are displayed at such refresh rate of the display screen. Therefore, attenuating the rate at which each frame is rendered means reducing the number of frames per second that are rendered. When such resource-intensive applications are in the foreground during multi-tasking scenarios, the refresh rate attenuation is selected such that the user experience is not compromised too drastically. For example, for user applications having displayed content that does not change that quickly, the frame rate is designed or set at a lowered rate, e.g. 10 fps, or the frame is refreshed only when the displayed content is to be changed. When such applications are in the foreground during multi-tasking scenarios, especially involving a resource-intensive background application, the refresh rate attenuation of the foreground application is lowered even more if possible without compromising user experience, or the frame is refreshed at an ad hoc rate, e.g. only when the displayed content is changed.

The background application (s) is also be modified so as to decrease their bandwidth contribution. In some common examples, the background applications is stopped/paused or have its frame rate attenuated or the window bounding it scaled down. The foreground application (s) is modified as long as the user experience is not compromised. The rate at which each frame of displayed content is rendered is reduced to a reasonable frame rate so that user experience is not compromised, yet the other applications or operations e.g. user actions can be acted upon responsively. The attenuated refresh rate is appropriately determined to advantageously compensate for the increase in memory bus loading during multi-tasking scenarios. For example, where the navigation application remains the foreground application, e.g. where at least part of the navigation application is displayed or when the navigation application is the only user application displayed, the displayed navigation map frame is rendered at a reasonably attenuated navigation map refresh rate to save some bandwidth in case user actions are required to be processed responsively, without lag. For foreground user applications having displayed content that does not change much, the frame rate is decreased from its original frame rate, e.g. 10 fps, to a lower frame rate, or alternatively the frame rate is retained at its original low frame rate but the background application(s) are modified to save bandwidth. There is a predetermined lower limit for the frame rate to be decreased to, e.g. 10 fps, or 8 fps, or 5 fps. Thus, depending on the character of the user application, e.g. constantly changing displayed content or originally low bandwidth, the foreground and/or background applications is modified accordingly.

The detection module detects conditions such as multi-tasking scenarios where the bus load can potentially compromise the system's performance. For example, the detection is based on the number of user applications running on the system.

The detection module is part of the user application or is an add-on code, for example a plugin to the foreground application. Thus, where the foreground application is a navigation application, the detection module is a plugin to the navigation engine. If the navigation engine is provided by a third party or cannot otherwise be modified, providing the detection module as a plugin is an efficient way to add the functionality of identifying whether any other application is activated in addition to the navigation application.

Where the detection module detects the number of user applications running on the system, the detection module is configured to detect the number of user applications requesting audio output. Thus, the detecting step comprises detecting the number of user applications running on the system which are requesting audio output. In an example, the detection module is a plugin to the system, specifically an audio plugin to the navigation engine, to manage any user application requesting audio output so that an appropriate channel to output the audio can be assigned. For a vehicle multimedia system, user applications that are resource-intensive or memory-intensive typically involve audio outputs. Thus, detecting user applications that request audio outputs is an effective way of determining the number of user applications running on the system. For example, when video playback and voice recognition are concurrently running, the detection module detects the audio output coming from the video playback and the voice recognition applications, and triggers the implementation of the refresh rate attenuation. The detection module is capable of identifying whether user applications that can potentially be run on the multimedia system are activated or deactivated, started up or stopped.

Alternatively, other ways to detect multi-tasking scenarios, to decide whether a refresh rate attenuation is required, are also within the scope of the present invention. For example, the display controller may identify the number of surfaces constructed for each running user application, or the system may identify the processing load or memory load utilized by each running user application. In an example, where the load on the memory bus (es) is detected to be above 70%, 75%, 80%, 85%, or 90%, the display controller is configured to render each frame of the displayed content at an attenuated rate. Detection of the memory bus load is a total load of all memory buses, e.g. internal buses (connections within a chip or component or unit) and/or external buses (connections between chips, components or units), to the relevant memory or storage medium, e.g. DDR memory. In another example, the amount of processing or the processing load required to render content of the user applications detected is used to decide whether refresh rate attenuation is required. For example, the amount of processing needed to render a navigation map display based on the density of the points of interest required to be displayed is calculated to decide whether refresh rate attenuation is required.

The display controller is part of the user application software, typically as part of one of the top two layers of code or traversing the top two layers of code. The display controller is a protocol specifying communication between a display server controlling the display of rendered contents and its clients, e.g. the user application. Alternatively, the display controller comprises a rendering module to control the rendering of data and the display of the rendered data. The display controller includes the functions of a display server and/or functions of combining surfaces from each user application to create a graphical user interface that is output to the display. The display controller controls the display of contents, transmit communications between the processor(s) and the input means, and/or output images to a display. By virtue of its role in the display of rendered contents, the display controller is able to determine which user application is a foreground application being displayed on a display.

Upon detection of multiple concurrent user applications or other methods of detection, the detection module notifies the user application or any part of the software architecture that controls or implements the refresh rate. The computer-readable instructions or logic that triggers the activation or deactivation of the refresh rate attenuation is part of the user application, typically as part of one of the top few layers of code or traversing the top few layers of code. The logic implementing the refresh rate attenuation is implemented in one of the middle layers of the foreground application. The logic calculates or determine an attenuation rate suitable for the multimedia system. The logic comprises a determination unit to determine the suitable attenuation rate. Alternatively, a suitable predetermined attenuation rate is obtained from the non-transitory computer-readable storage medium. The logic may then instruct the display controller to render each frame of the displayed content at the attenuated rate.

As mentioned above, the detection module notifies the logic implementing the refresh rate attenuation of the foreground application or displayed content, and an appropriate attenuation rate is calculated, obtained or otherwise determined. The display controller may then be notified of the determined attenuation rate and the displayed content is rendered at the attenuated rate. The display controller is notified by way of the information, including the determined refresh rate attenuation value, exchanged between the user application and display server.

Where the appropriate attenuation rate is obtained from memory, the system is designed with predetermined attenuated refresh rates for each concurrent use case. For example, an attenuated refresh rate value that achieves a target decrease in bus load or a target bus load, is selected. This is possible since the number of user applications are fixed in typical vehicle multimedia systems. Thus, a matrix for each concurrent scenario is input into the non-transitory computer-readable storage medium.

The refresh rate is attenuated depending on the number of user applications running concurrently. In an example, the refresh rate is attenuated proportionately to the number of user applications running concurrently. For example, if two applications are concurrently running, the designed refresh rate of each application is halved; if three applications are concurrently running, the refresh rate of each application is attenuated to a third of its designed refresh rate; etc. In another example, the refresh rate is attenuated based on the total load on the memory bus. The display controller receives a rate of attenuation if the total load on the memory bus exceeds a threshold, so that all user applications rendering content are rendered at the same rate. Alternatively, upon exceeding a threshold bus load, the rate of attenuation differs from user application to user application, from one use case to another use case. Using an example of a foreground navigation application, the frame rate of a map of a straight road is attenuated more aggressively, if need be, as compared to the frame rate of a map of a curved road. As and when the detection module detects the crossing of a threshold, the attenuation rate is adjusted accordingly. Thus, the reduction in the refresh rate may advantageously be implemented when needed, e.g. in gradual steps depending on the number of user applications competing for the memory bus bandwidth. The display controller receives a dynamically adjustable rate of attenuation based on the memory bus load. The reduction of refresh rate may therefore be dynamically determined after each change in condition, e.g. a change of the number of user applications.

When the condition is within the threshold, e.g. when the foreground application is detected as the only user application running on the system, or when the detection module detects that no other user applications are activated, the detection module notifies the logic implementing the refresh rate attenuation to remove any attenuation rate or refresh rate cap. The display controller is then notified of the attenuation rate (or lack thereof) and renders the displayed content according to the provided refresh rate. Thus, when the foreground application is running alone, the original refresh rate designed is advantageously adopted.

## Claims

1. A multimedia system (100) in a vehicle, the system capable of concurrently running more than one user application, the system comprising:
at least one processor; and
computer-readable storage media (118) comprising non-transitory computer-readable storage medium having computer-readable instructions stored thereon,the system being configured to execute the computer-readable instructions by the at least one processor,
wherein the multimedia system further comprises:
a detection module configured to detect a condition of the multimedia system; and
a display controller configured to determine a foreground user application being displayed on a display, and configured to render displayed content
the display controller is configured to render each frame of the displayed content at an attenuated rate, in response to the condition of the system detected by the detection module going above a threshold; and
the display controller is configured to render each frame of the displayed content without any attenuation, in response to the condition of the multimedia system detected by the detection module is being below a threshold, **characterised by**:
wherein the condition is load of bus(es) (30) to the computer-readable storage media, wherein the detection of the bus load is based on detecting a number of user applications concurrently running on the system,
wherein the threshold is more than one user application concurrently running request audio output.

2. The system of claim 1, wherein
the condition of the multimedia system is determined to go beyond a threshold in response to the detection module detects the bus load is above 90%; and
the condition of the multimedia system is determined to be within a threshold in response to the detection module detects the bus load is below 70%.

3. The system of any preceding claim, wherein the detection module is a plugin to the foreground application.

4. The system of any preceding claim, wherein the foreground user application is a navigation application.

5. A method of optimizing performance of a multimedia system in a vehicle (100) capable of concurrently running more than one user application, the method comprising:
executing, by at least one processor of a multimedia system having computer-readable instructions stored in computer-readable storage medium comprising non-transitory computer-readable storage medium, wherein the method further comprising:
detecting, by a detection module, the condition of a multimedia system, the condition comprising loading of bus (es) to at least one processor of the multimedia system, each of the at least one processor having a computer-readable storage media and a computer-readable instructions stored thereon, wherein;
in response to the condition of the system detected by the detection module going above a threshold, rendering, by way of a display controller, each frame of a displayed content to an attenuation rate;
and
in response to the condition of the multimedia system detected by the detection module being below a threshold, rendering, by way of the display controller, each frame fo the displayed content without any attenuation, **characterised by** that:
wherein the condition of loading of bus(es) (30) to the computer-readable storage media (118);
wherein
detecting the loading of bus (es) is based on detecting a number of user applications concurrently running on the system;
wherein the threshold is running more than one user application concurrently requesting audio output.

6. The method of claim 5, further comprising:
rendering, by way of the display controller, each frame at an attenuated rate in response to detecting the loading of bus(es) above 90%; and
rendering, by the display controller, each frame without any attenuation. in response to detecting the loading bus(es) below 70%.

7. The method of any one of claims 5-6, wherein the detection module is a plugin to the system.

8. The method of any one of claims 5-7, wherein the foreground application is a navigation application.

## Patentansprüche

1. Multimediasystem (100) in einem Fahrzeug, wobei das System in der Lage ist, mehr als eine Benutzeranwendung gleichzeitig auszuführen, wobei das System Folgendes aufweist:
mindestens einen Prozessor; und
computerlesbare Speichermedien (118), die ein nichtflüchtiges computerlesbares Speichermedium mit darauf gespeicherten computerlesbaren Anweisungen aufweisen, wobei das System ausgebildet ist, die computerlesbaren Anweisungen durch den mindestens einen Prozessor auszuführen,
wobei das Multimediasystem ferner Folgendes aufweist:
ein Erkennungsmodul, das ausgebildet ist, einen Zustand des Multimediasystems zu erkennen; und
eine Anzeigesteuereinheit, die so ausgebildet ist, dass sie eine Vordergrund-Benutzeranwendung bestimmt, die auf einer Anzeigevorrichtung angezeigt wird, und die so ausgebildet ist, dass sie angezeigte Inhalte wiedergibt;
wobei die Anzeigesteuereinheit ausgebildet ist, jedes Einzelbild des angezeigten Inhalts mit einer Abschwächungsrate wiederzugeben, wenn der vom Erkennungsmodul erkannte Zustand des Systems einen Schwellenwert überschreitet; und
wobei die Anzeigesteuereinheit ausgebildet ist, jedes Einzelbild des angezeigten Inhalts ohne jegliche Abschwächung wiederzugeben, wenn der vom Erkennungsmodul erkannte Zustand des Multimediasystems unter einem Schwellenwert liegt, **gekennzeichnet durch**:
wobei es sich bei dem Zustand um die Belastung des Busses (der Busse) (30) zu den computerlesbaren Speichermedien handelt, wobei das Erkennen der Busbelastung auf dem Erkennen einer Anzahl von Benutzeranwendungen basiert, die gleichzeitig auf dem System laufen,
wobei der Schwellenwert mehr als eine gleichzeitig laufende Benutzeranwendung ist, die eine Audioausgabe anfordert.

2. System nach Anspruch 1, wobei
bestimmt wird, dass der Zustand des Multimediasystems einen Schwellenwert überschreitet, wenn das Erkennungsmodul erkennt, dass die Busbelastung über 90 % liegt; und
bestimmt wird, dass der Zustand des Multimediasystems innerhalb eines Schwellenwertes liegt, wenn das Erkennungsmodul erkennt, dass die Busbelastung unter 70 % liegt.

3. System nach einem der vorhergehenden Ansprüche, wobei das Erkennungsmodul ein Plugin für die Vordergrundanwendung ist.

4. System nach einem der vorhergehenden Ansprüche, wobei die Vordergrund-Benutzeranwendung eine Navigationsanwendung ist.

5. Verfahren zum Optimieren der Leistung eines Multimediasystems in einem Fahrzeug (100), das in der Lage ist, mehr als eine Benutzeranwendung gleichzeitig auszuführen, wobei das Verfahren Folgendes beinhaltet:
Ausführen, durch mindestens einen Prozessor eines Multimediasystems mit computerlesbaren Anweisungen, die in einem computerlesbaren Speichermedium gespeichert sind, wobei das Verfahren ferner Folgendes beinhaltet:
Erkennen, durch ein Erkennungsmodul, des Zustands eines Multimediasystems, wobei der Zustand die Belastung des Busses (der Busse) zu mindestens einem Prozessor des Multimediasystems beinhaltet, wobei jeder der mindestens einen Prozessoren ein computerlesbares Speichermedium und darauf gespeicherte computerlesbare Anweisungen aufweist, wobei;
als Reaktion darauf, dass der vom Erkennungsmodul erkannte Zustand des Systems einen Schwellenwert überschreitet, Wiedergeben, mittels einer Anzeigesteuereinheit, jedes Einzelbilds eines angezeigten Inhalts mit einer Abschwächungsrate;
und
als Reaktion auf den vom Erkennungsmodul erkannten Zustand des Multimediasystems, der unterhalb eines Schwellenwertes liegt,
Wiedergeben, mittels der Anzeigesteuereinheit, jedes Einzelbilds des angezeigten Inhalts ohne jegliche Abschwächung, **dadurch gekennzeichnet, dass**:
wobei der Zustand der Belastung des Busses (der Busse) (30) auf die computerlesbaren Speichermedien (118);
wobei
das Erkennen der Belastung des Busses (der Busse) auf dem Erkennen einer Anzahl von Benutzeranwendungen basiert, die gleichzeitig auf dem System laufen;
wobei der Schwellenwert mehr als eine Benutzeranwendung betrifft, die gleichzeitig eine Audioausgabe anfordern.

6. Verfahren nach Anspruch 5, das ferner Folgendes beinhaltet:
Wiedergeben, mittels der Anzeigesteuereinheit, jedes Einzelbilds mit einer Abschwächungsrate als Reaktion auf das Erkennen der Belastung des Busses (der Busse) über 90 %; und
Wiedergeben, durch die Anzeigesteuereinheit, jedes Einzelbilds ohne jegliche Abschwächung, als Reaktion auf das Erkennen der Belastung des Busses (der Busse) unter 70 %.

7. Verfahren nach einem der Ansprüche 5-6, wobei das Erkennungsmodul ein Plugin für das System ist.

8. Verfahren nach einem der Ansprüche 5-7, wobei die Vordergrundanwendung eine Navigationsanwendung ist.

## Revendications

1. Système multimédia (100) dans un véhicule, le système étant capable d'exécuter simultanément plus d'une application utilisateur, le système comprenant :
au moins un processeur ; et
des supports de stockage lisibles par ordinateur (118) comprenant un support de stockage lisible par ordinateur non transitoire sur lequel sont stockées des instructions lisibles par ordinateur, le système étant configuré pour exécuter les instructions lisibles par ordinateur par l'au moins un processeur,
le système multimédia comprenant en outre :
un module de détection configuré pour détecter un état du système multimédia ; et
un dispositif de commande d'affichage configuré pour déterminer une application utilisateur de premier plan affichée sur un écran, et configuré pour rendre le contenu affiché
le dispositif de commande d'affichage étant configuré pour effectuer le rendu de chaque trame du contenu affiché à un taux atténué, en réponse au fait que l'état du système détecté par le module de détection dépasse un seuil ; et
le dispositif de commande d'affichage étant configuré pour rendre chaque trame du contenu affiché sans aucune atténuation, en réponse au fait que l'état du système multimédia détecté par le module de détection est inférieur à un seuil,
**caractérisé par** :
l'état étant la charge d'un ou de bus (30) sur les supports de stockage lisibles par ordinateur, la détection de la charge de bus étant basée sur la détection d'un nombre d'applications utilisateur s'exécutant simultanément sur le système,
le seuil étant de plus d'une application utilisateur exécutant simultanément une demande de sortie audio.

2. Système selon la revendication 1,
l'état du système multimédia étant déterminé comme dépassant un seuil en réponse à la détection par le module de détection d'une charge de bus supérieure à 90 % ; et
l'état du système multimédia étant déterminé comme étant en deçà des limites d'un seuil lorsque le module de détection détecte que la charge de bus est inférieure à 70 %.

3. Système selon n'importe quelle revendication précédente, le module de détection étant un plugin de l'application de premier plan.

4. Système selon n'importe quelle revendication précédente, l'application utilisateur de premier plan étant une application de navigation.

5. Procédé d'optimisation des performances d'un système multimédia dans un véhicule (100) capable d'exécuter simultanément plus d'une application utilisateur, le procédé comprenant :
l'exécution, par au moins un processeur d'un système multimédia ayant des instructions lisibles par ordinateur stockées dans un support de stockage lisible par ordinateur comprenant un support de stockage lisible par ordinateur non transitoire, le procédé comprenant en outre :
la détection, par un module de détection, de l'état d'un système multimédia, l'état comprenant le chargement d'un ou de bus sur au moins un processeur du système multimédia, chacun des au moins un processeur ayant un support de stockage lisible par ordinateur et des instructions lisibles par ordinateur stockées sur celui-ci ;
en réponse au fait que l'état du système détecté par le module de détection dépasse un seuil, le rendu, par l'intermédiaire d'un dispositif de commande d'affichage, de chaque trame d'un contenu affiché à un taux d'atténuation ;
et
en réponse au fait que l'état du système multimédia détecté par le module de détection est inférieur à un seuil,
le rendu, par l'intermédiaire du dispositif de commande d'affichage, de chaque trame du contenu affiché sans aucune atténuation,
**caractérisé par** :
l'état de chargement d'un ou de bus (30) sur les supports de stockage lisibles par ordinateur (118) ;
avec
la détection du chargement d'un ou de bus étant basée sur la détection d'un nombre d'applications utilisateur fonctionnant simultanément sur le système ;
le seuil correspondant à l'exécution simultanée de plus d'une application utilisateur demandant une sortie audio.

6. Procédé selon la revendication 5, comprenant en outre :
le rendu, par l'intermédiaire du dispositif de commande d'affichage, de chaque trame à un taux atténué en réponse à la détection d'une charge d'un ou de bus supérieure à 90 % ; et
le rendu, par le dispositif de commande d'affichage, de chaque trame sans aucune atténuation en réponse à la détection d'une charge d'un ou de bus inférieure à 70 %.

7. Procédé selon l'une quelconque des revendications 5 et 6, le module de détection étant un plugin du système.

8. Procédé selon l'une quelconque des revendications 5 à 7, l'application de premier plan étant une application de navigation.
